# EUROPÄISCHE PATENTSCHRIFT

(11) **EP 3 353 758 B1**
(45) Veröffentlichungstag und Bekanntmachung des Hinweises auf die Patenterteilung: **09.09.2020**
(21) Anmeldenummer: 16779005.4
(22) Anmeldetag: 20.09.2016
(51) Int. Cl.: G08B 25/01, G08G 1/00, H04W 4/00

(54) **VERFAHREN UND SYSTEM ZUM GENERIEREN UND ÜBERTRAGEN EINES NOTRUFSIGNALS**
METHOD AND SYSTEM FOR GENERATING AND TRANSMITTING AN EMERGENCY CALL SIGNAL
PROCÉDÉ ET SYSTÈME POUR GÉNÉRER ET TRANSMETTRE UN SIGNAL D'URGENCE

(30) Priorität: 22.09.2015 DE 102015218170
(43) Veröffentlichungstag der Anmeldung: 01.08.2018
(73) Patentinhaber: Digades GmbH, 02763 Zittau (DE)
(72) Erfinder: SCHINKEL, Manius, 99752 Lipprechterode (DE); SCHWENK, Christoph, 01877 Demitz-Thumitz (DE); SCHMUCKING, Christian, 99734 Nordhausen (DE)
(74) Vertreter: Pfenning, Meinig & Partner mbB
(86) Internationale Anmeldenummer: PCT/EP2016/072280
(87) Internationale Veröffentlichungsnummer: WO 2017/050748

(56) Entgegenhaltungen:
- WO-A1-2009/071338
- WO-A1-2009/071343
- WO-A1-2011/059515

## Beschreibung

Die vorliegende Erfindung betrifft ein Verfahren und ein System zum Generieren und Übertragen eines Notrufsignals.

Bei Automobilen werden aufgrund gestiegener Sicherheitsanforderungen zunehmend selbstständig agierende Sicherheitssysteme gefordert. In diesem Zusammenhang wird bis 2018 ein pan-europäisches elektronisches Notrufsystem, auch als "e-Call"-System bekannt, installiert, bei dem bei einem Unfall automatisch eine Telekommunikationsverbindung zu einer Notrufzentrale aufgebaut wird, so dass ein Fahrer des Fahrzeugs mit der Notrufzentrale kommunizieren kann.

Nachteilig an dieser Lösung ist, dass das System dann an Grenzen stößt, wenn nach dem Unfall keiner der Fahrzeuginsassen mehr in der Lage ist, mit der Notrufzentrale zu sprechen, beispielsweise wegen einer Bewusstlosigkeit, oder die Sprache des Mitarbeiters der Notrufzentrale nicht beherrscht. Die im Rahmen des Notrufes übermittelten Daten des "MSD" (Minimum Set of Data) beinhalten nur die als Minimum im Standard verankerten Daten über das Fahrzeug und dessen Position.

WO 2011/059515 A1 offenbart ein System zum Generieren und Übertragen eines Notrufsignals nach dem Obergriff des Anspruchs 10.

Der vorliegenden Erfindung liegt daher die Aufgabe zugrunde, ein Verfahren und ein System zu entwickeln, dass die genannten Nachteile vermeidet, mit dem also sprachunabhängig Informationen über das Fahrzeug und den Fahrer an eine Notrufzentrale übermittelt werden können.

Diese Aufgabe wird erfindungsgemäß gelöst durch ein Verfahren nach Anspruch 1 und ein System nach Anspruch 10. Vorteilhafte Ausgestaltungen und Weiterbildungen sind in den abhängigen Ansprüchen beschrieben.

Ein Verfahren zum Generieren und Übertragen eines Notrufsignals wird eingeleitet, indem bei einer Gefahrensituation eines Straßenfahrzeugs, typischerweise eines Personenkraftwagens, eines Lastkraftwagens, eines Motorrades oder eines Quads, durch ein an dem Straßenfahrzeug angeordnetes Basismodul ein Notrufsignal mit einem minimalen Datensatz (MSD) generiert wird. Der minimale Datensatz enthält zumindest eine Identitätsinformation des jeweiligen Basismoduls, beispielsweise eine Seriennummer, und eine durch satellitengestützte Navigation oder durch eine Identifikation der Funkzelle, in der sich das Straßenfahrzeug befindet (z.B. der Cell-ID der Mobilfunkbasisstation) ermittelte Positionsinformation des Basismoduls.

Durch Herstellen einer ersten Telekommunikationsverbindung mittels vorherbestimmter und im Basismodul hinterlegter Verbindungsinformationen zu einer zentralen Vermittlungseinheit wird das Notrufsignal übermittelt. Nachfolgend wird von der zentralen Vermittlungseinheit das Notrufsignal bezüglich der darin enthaltenen codierten Informationen decodiert und mit Hilfe dieser Informationen und der unter Umständen in der zentralen Vermittlungseinheit abgelegten weiteren Informationen eines Benutzers, beispielsweise eines Fahrers, eine Textdatei in einer Sprache generiert, die in einem durch die Positionsinformation definierten Gebiet üblich ist, vorzugsweise einer Amtssprache des Gebietes, in dem sich das Straßenfahrzeug samt dem Basismodul gerade befindet. Durch die in einer Speichereinheit der zentralen Vermittlungseinheit hinterlegten Daten wird die sprachabhängige Textdatei in eine Audiodatei umgewandelt. Nachfolgend wird von dem Basismodul durch Herstellen einer Konferenzschaltung mit einer Notrufzentrale, die auch als Rettungsleitstelle bezeichnet werden kann, Kontakt aufgenommen und die Audiodatei durch die zentrale Vermittlungseinheit mindestens einmal als gesprochene Information abgespielt.

Eine alternative Abfolge, die keine Konferenzschaltung benötigt, sieht vor, dass der minimale Datensatz (MSD) per Datenkanal im Mobilfunknetz an die zentrale Vermittlungseinheit übermittelt wird, diese die generierte Sprachdatei per Datenkanal an das Basismodul übermittelt und dann die Verbindung mit der zentralen Vermittlungseinheit aufgelöst wird. In Folge baut das Basismodul eine zweite Sprachverbindung mit der Notrufzentrale auf und spielt die von der zentralen Vermittlungseinheit generierte Sprachdatei ab. Der als Notrufsignal übermittelte Datensatz ist nach dem e-Call-Standard formatiert und umfasst mindestens den minimalen Datensatz (MSD).

Im Falle eines Nichtzustandekommens der ersten Telekommunikationsverbindung zu der zentralen Vermittlungseinheit kann durch das Basismodul selbständig eine_Telekommunikationsverbindung zu einer Notrufzentrale hergestellt und sowohl der minimale Datensatz (MSD) übermittelt, als auch eine Sprachverbindung unterstützt werden. Eine Sprachverbindung kann durch den Aufbau und das Aufrechterhalten einer Funkverbindung oder einer Telefonverbindung unterstützt werden.

Das Basismodul kann am Anfang der Sprachverbindung zu der Notrufzentrale den minimalen Datensatz (MSD) konform mit dem pan-europäischen e-Call-Standard, gefolgt von der "vorgelesenen" Variante, übermitteln.

Dadurch, dass das Notrufsignal mindestens Informationen enthält, durch die das von einer Gefahrensituation, wie einem Unfall betroffene Straßenfahrzeug aufgrund des fest an dem Straßenfahrzeug montierten Basismoduls eindeutig identifizierbar ist und eine genaue Feststellung der Position ermöglicht, liegen alle wesentlichen Informationen vor, um die Notrufzentrale in Kenntnis von der Gefahrensituation zu setzen. Indem die Verbindungsinformation im Basismodul hinterlegt ist, kann selbstständig das Notrufsignal abgesetzt werden.

Die Übermittlung des minimalen Datensatzes (MSD) in codierter Form dient einerseits einer anonymisierten Übertragung, kann andererseits aber auch das zu übertragende Datenvolumen durch gepackte Daten gering halten. Durch die Umwandlung der Informationen des Notrufsignals in eine Audiodatei, die in einer Sprache gehalten ist, die in dem durch die Positionsinformationen definierten Gebiet gesprochen wird, kann die Notrufzentrale die übermittelten Informationen zur Gefahrensituation in jedem Fall auswerten. Da eine Verarbeitung des Notrufsignals und das Erzeugen sprachabhängiger Text- und Audiodateien erst in der zentralen Vermittlungseinheit und nicht bereits im Basismodul durchgeführt wird, sind zum Einen neue Sprachen, weitere Informationen oder Neuerungen einfacher einpflegbar, da das betroffene Fahrzeug nicht in einer Werkstatt auf den neuesten Stand gebracht werden muss, zum Anderen wird weniger Speicherplatz in dem Basismodul benötigt, so dass dieses kompakter und kostengünstiger gebaut werden kann. Hier ist insbesondere der Verzicht auf einen DSP (Digitaler Signalprozessor) zum Erzeugen der Sprache in den verschiedenen Sprachen, der Verzicht auf größere Controller, und der Verzicht auf größere Speicher hervorzuheben. In Bezug auf die Software kann auf eine kompaktere Softwarearchitektur hingewiesen werden.

Eine Übermittlung von Daten kann an der Verfügbarkeit der nötigen In-Band Übertragungstechnologie gemäß dem pan-europäischen e-Call in den PSAP (Rettungsleitstellen) scheitern. Im pan-europäischen e-Call werden e-Callrelevante Daten, wie Position, Fahrzeugklasse, VIN usw. per In-Band Methode, also innerhalb des Sprachfrequenzbandes, als Minimum Set of Data im Rahmen des pan-europäischen e-Calls übertragen. Eine Gegenstelle, die diese Daten entschlüsseln kann, hat die Möglichkeit, die relevanten Daten zu erkennen und entsprechend zu reagieren. Eine heutige Gegenstelle ohne die Möglichkeit, In-Band-Daten zu decodieren, würde keine Angaben erhalten, die Angabe von Position, Fahrzeugklasse usw. erfolgt in diesem Fall in der vorliegenden Erfindung per Sprache, indem die automatisch generierte Datei, mit den relevanten Informationen vorgelesen wird. In Ländern, wo keine In-Band-Kommunikation unterstützt wird (z. B. außerhalb der EU), bietet das ebenfalls den Vorteil, dass der Notrufentgegennehmende eine Notrufansage in seiner Landessprache erhält und die relevanten Daten (Position, Fahrzeugklasse usw.) angesagt bekommt. Die Ansage kann sich wiederholen. Das vorliegende Notrufsystem ist also völlig unabhängig von dem pan-europäischen e-Call-Standard zu betreiben, bleibt jedoch kompatibel.

Es kann außerdem vorgesehen sein, dass die erste Telekommunikationsverbindung und/oder die zweite Telekommunikationsverbindung eine Funkverbindung bzw. Telefonverbindung ist. Typischerweise ist zumindest eine der Telekommunikationsverbindungen als Internet-Telefonie-Verbindung ausgeführt, die auch als "Voiceover-Internet-Protocol" (VolP)-Verbindung bezeichnet wird.

Die zentrale Vermittlungseinheit kann ein Stoppsignal an das Basismodul übertragen, sobald die Textdatei in der zentralen Vermittlungseinheit generiert wurde, so dass das Übermitteln des Notrufsignals durch das Basismodul beendet wird. Dies hilft, unnötigen Informationsübertrag zu vermeiden, zumal, beispielsweise bei Massencrashs - bei denen gleichzeitig eine Vielzahl derartiger Notrufsignale abgesetzt werden - Telekommunikationskanäle oftmals überlastet sind. Die Erkennung von mehreren Notrufen von demselben Unfall oder Unfallbereich ist nur durch eine zentrale Anlaufstelle, wie einer zentralen Vermittlungseinheit möglich.

Die decodierten Informationen des Notrufsignals können von der zentralen Vermittlungseinheit an eine externe Speichereinheit weitergeleitet und dort archiviert werden. Dies kann zum Beispiel nach der Gefahrensituation zu Beweis- bzw. Dokumentationszwecken verwendet werden.

Auch eine Benachrichtigung von weiteren Parteien, die beispielsweise durch den Fahrer oder einen anderen Benutzer des Fahrzeugs in der zentralen Vermittlungseinheit vorkonfiguriert werden können, kann durch die zentrale Vermittlungseinheit erfolgen. Das System könnte zusätzlich verwendet werden, um Verkehrs- und Unfalldaten zu erfassen und nach geeigneter Auswertung interessierten privaten und öffentlichen Organisationen zur Verfügung stellen.

Der Benutzer des Straßenfahrzeugs, typischerweise der Fahrer, kann über eine kabellose Funkverbindung, vorzugsweise über eine kabellose Funkverbindung nach dem Industriestandard IEEE 802.15.1, der auch als Bluetooth bekannt ist, mit dem Basismodul in einer Sprachverbindung verbunden sein. Hierdurch kann der Benutzer auch mit der Notrufzentrale kommunizieren und Informationen zum eigenen Befinden oder weiteren von der Gefahrensituation bzw. dem Unfall betroffenen Personen weitergeben. Vorzugsweise wird hierzu eine Konferenzschaltung zwischen dem Basismodul, der Notrufzentrale und der zentralen Vermittlungseinheit aufgebaut, bei der der Benutzer in direkten Kontakt mit die Notrufzentrale treten kann
In besonders bevorzugter Weise kann die Audiodatei automatisiert mehrere Male nach dem Herstellen der zweiten Telekommunikationsverbindung der Notrufzentrale vorgespielt werden, um eventuell beim erstmaligen Abspielen nicht verstandene Informationen noch zu übermitteln. Es kann auch ein erneutes Abspielen von der Notrufzentrale initiiert werden. Außerdem kann auch die Audiodatei in ständiger Wiederholung der Notrufzentrale vorgespielt werden, bis diese oder der Fahrer durch Sprache oder ein anderweitig übermitteltes Signal dieses Abspielen stoppt. Dies kann beispielsweise durch Trennung der Verbindung erreicht werden.

Es kann auch vorgesehen sein, dass durch das Basismodul das Herstellen der ersten Telekommunikationsverbindung dem Benutzer des Fahrzeugs angezeigt wird, beispielsweise durch eine Sprachnachricht oder ein optisches Signal, und der Benutzer das Übertragen des Notrufsignals beenden kann, um bei einem Fehlalarm keinen unnötigen Rettungseinsatz auszulösen.

Die Positionsinformation kann hierbei aus einem satellitenbasierten System zur Positionserkennung wie beispielsweise dem Global Positioning System (GPS), Glonass, Beidou oder Galileo erhalten werden. Dies erlaubt eine Positionsbestimmung mit sehr hoher Genauigkeit. Das Basismodul weist in diesem Fall eine auf das jeweilige System abgestimmte Empfangseinheit auf. Alternativ kann die Cell-ID der Mobilfunkbasisstation von der zentralen Vermittlungseinheit verwendet werden, um die Position grob zu bestimmen. Dies kann allerdings zu recht großer Unschärfe führen und dazu führen, dass die Notrufzentrale keine Hilfe senden wird.

Ein System zum Generieren und Übertragen eines Notrufsignals weist ein Basismodul und eine zentrale Vermittlungseinheit auf. Das Basismodul ist an einem Straßenfahrzeug angeordnet und dazu eingerichtet, bei einer Gefahrensituation des Straßenfahrzeuges ein Notrufsignal mit einem minimalen Datensatz, der zumindest eine Identitätsinformation des jeweiligen Basismoduls und eine durch satellitengestützte Navigation ermittelte Positionsinformation des Basismoduls enthält, in codierter Form selbstständig zu generieren und durch Herstellen einer ersten Telekommunikationsverbindung mittels vorherbestimmter und im Basismodul hinterlegter Verbindungsinformationen zu einer zentralen Vermittlungseinheit zu übermitteln.

Die zentrale Vermittlungseinheit ist dazu eingerichtet, nachfolgend das Notrufsignal bezüglich der darin enthaltenen Informationen zu decodieren und aus der Positionsinformation durch die zentrale Vermittlungseinheit eine Textdatei in einer Sprache zu generieren, die in einem durch die Positionsinformation definierten Gebiet üblicherweise gesprochen wird sowie diese sprachabhängige Textdatei durch in einer Speichereinheit der zentralen Vermittlungseinheit hinterlegte Daten in eine Audiodatei umzuwandeln.

Die zentrale Vermittlungseinheit ist weiter dazu ausgebildet, die Audiodatei über die erste Telekommunikationsverbindung an das Basismodul zu übermitteln. Das Basismodul ist weiter dazu ausgebildet, nachfolgend durch Herstellen einer zweiten Telekommunikationsverbindung eine Notrufzentrale zu kontaktieren und die Audiodatei abzuspielen.

In einer Alternative kann das Basismodul dazu ausgebildet sein, durch Herstellen einer weiteren Telekommunikationsverbindung in Form einer Konferenzschaltung eine Notrufzentrale zu kontaktieren und die zentrale Vermittlungseinheit kann gleichzeitig dazu ausgebildet sein, die Audiodatei in der Konferenzschaltung abzuspielen.

Das Basismodul kann weiterhin dazu ausgebildet sein, im Falle eines Nichtzustandekommens der ersten Telekommunikationsverbindung zu der zentralen Vermittlungseinheit selbständig eine_Telekommunikationsverbindung zu einer Notrufzentrale herzustellen und sowohl den minimalen Datensatz (MSD) zu übermitteln, als auch eine Sprachverbindung zu unterstützen.

Vorzugsweise ist die zentrale Vermittlungseinheit ein Server, der zum Umwandeln der Textdatei in die Audiodatei eine Text-zu-Sprache-Einheit aufweist.

Die zentrale Vermittlungseinheit kann zusätzlich als Datenbank dienen, um optional sensitive Daten über den Fahrer zu speichern und im Notfall weiterzuleiten. Dies können Gesundheitsinformationen, wie z.B. Blutgruppe, Allergien, und Krankheiten sein oder Kontakte, die im Notfall benachrichtigt werden sollten.

In einer weiteren Ausbauphase des Systems kann die zentrale Vermittlungseinheit Daten speichern, die durch das Basismodul auch im Normalbetrieb, d.h. in einem unfallfreien Betrieb, gesammelt werden können. Dies können z.B. Positionsdaten oder Daten über das Fahrverhalten sein. Positionsdaten können z.B. dazu dienen ein gestohlenes Fahrzeug zu orten. Diese Daten können über eine App oder per Sprachansage auch telefonisch abgerufen werden.

Alternativ oder zusätzlich kann im Basismodul exakt eine einzige regionenspezifische Notrufinformation in Form einer anzuwählenden Notrufnummer, beispielsweise die Notrufnummer "112" hinterlegt sein, so dass kein Speicherplatz für weitere Notrufnummern benötigt wird, die ohnehin in bestimmten Regionen, beispielsweise Europa, nicht benötigt werden.

Das beschriebene System ist typischerweise zum Durchführen des beschriebenen Verfahrens eingerichtet bzw. das beschriebene Verfahren ist mit dem beschriebenen System durchführbar.

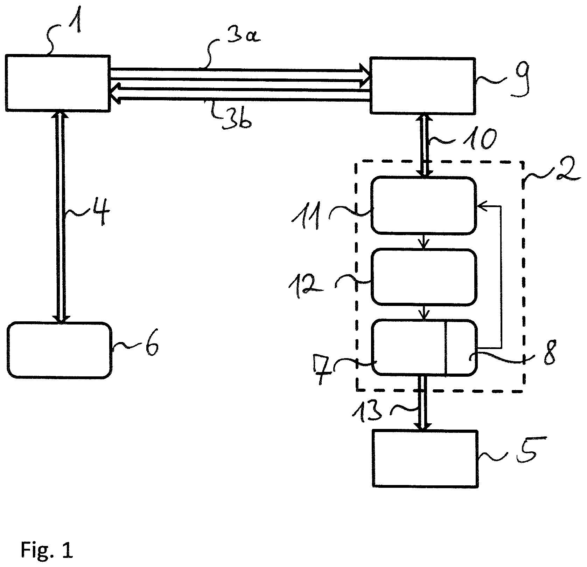

Ein Ausführungsbeispiel der Erfindung ist in der Zeichnung dargestellt und wird nachfolgend anhand von Figur 1 erläutert.

Das Beispiel eines erfindungsgemäßen Systems besteht aus:
1) einem Basismodul 1, das in einem Fahrzeug verbaut ist.
2) einer zentralen Vermittlungseinheit 2 bestehend aus
   a) einer Nebenstelle 11, um Anrufe entgegenzunehmen,
   b) einem In-Band-Kommunikationsserver 12, der das empfangene Signal auswertet,
   c) einer Text-zu-Sprache-Einheit 7, die das ausgewertete Signal in Sprache umsetzt, und
   d) einer Speichereinheit 8, die die resultierende Sprachdatei speichert.

Mitwirkend sind ein SIP-Provider 9 (Session Initiation Protocol) und eine Notrufzentrale 6 zur Entgegennahme von Notrufen.

Figur 1 zeigt ein schematisches Diagramm, in dem Kommunikationswege zwischen einzelnen Einheiten eines Systems zum Generieren und Übertragen eines Notrufsignals eingezeichnet sind. Das Basismodul 1 übermittelt bei einem Unfall durch eine erste Telekommunikationsverbindung 3a der zentralen Vermittlungseinheit 2 über das Mobilfunknetz und den SIP-Provider 9 (Session Initiation Protocol) ein Notrufsignal mit einem minimalen Datensatz (MSD), der zumindest eine Identifikationsnummer des von dem Unfall betroffenen Basismoduls 1 und eine Position desselben umfasst. Das Basismodul 1 ist an dem Fahrzeug angeordnet und verfügt über einen Empfänger für ein satellitengestütztes Navigationssystem, durch den die Position ermittelbar ist. Außerdem ist eine Sendeeinheit vorgesehen, die mit der zentralen Vermittlungseinheit 2 über das Mobilfunknetz und den SIP-Provider 9 in Kontakt treten kann. Diese übermittelt das Notrufsignal in codierter Form, worunter insbesondere ein verschlüsseltes Signal und/oder ein moduliertes oder gepacktes Signal verstanden werden soll.

In dem dargestellten Ausführungsbeispiel wird durch Initiieren einer Verbindung 10 mit dem In-Band-Kommunikationsserver 12 als der zentralen Vermittlungseinheit 2 das Notrufsignal über eine erste Telekommunikationsverbindung 3a, im dargestellten Ausführungsbeispiel eine VolP-Verbindung, weitergeleitet und in dem In-Band-Kommunikationsserver als zentrale Vermittlungseinheit 2 weiterverarbeitet. In weiteren Ausführungsbeispielen kann auch der SIP-Provider 9 Teil des In-Band-Kommunikationsservers als zentrale Vermittlungseinheit 2 sein.

Die Nebenstelle 11 in dem In-Band-Kommunikationsserver als zentrale Vermittlungseinheit 2, im dargestellten Ausführungsbeispiel z.B. ein Asterisk-PBX (Private Branch Exchange), nimmt das Notrufsignal entgegen, übermittelt es an den In-Band-Server 12, der das Notrufsignal decodiert. Nach dem Decodieren erzeugt der In-Band-Server 12 eine sprachabhängige Textdatei. Die Sprache der Datei richtet sich im dargestellten Ausführungsbeispiel nach einer Amtssprache des Landes oder der Region, in dem sich das Fahrzeug laut den Positionsinformationen gerade befindet. Hierzu sind in einem Speicher des In-Band-Kommunikationsservers als zentrale Vermittlungseinheit 2 mehrere entsprechende sprachabhängige Textdateien gespeichert.

Die sprachabhängige Textdatei wird an eine Text-zu-Sprache-Einheit 7 übergeben, die ebenfalls eine interne Speichereinheit 8 aufweist. Die Text-zu-Sprache-Einheit 7, die auch als "Text-to-Speech"-Einheit (TTS) bezeichnet wird, wandelt die sprachabhängige Textdatei in eine Audiodatei in der gleichen Sprache um, wozu sie auf gespeicherte Sprachausdrücke, die in der internen Speichereinheit 8 hinterlegt sind, zurückgreift. Die Text-zu-Sprache-Einheit 7 leitet die Audiodatei an die Nebenstelle 11 weiter. Außerdem übermittelt die Text-zu-Sprache-Einheit 7 ein Stoppsignal über die Nebenstelle 11, um eine weitere Übertragung des Notrufsignals zu unterbinden. Gleichzeitig werden in dem dargestellten Ausführungsbeispiel die in dem ursprünglichen Notrufsignal enthaltenen Informationen sowie die erzeugte Textdatei und die erzeugte Audiodatei über einen Kommunikationskanal 13 unabhängig von vorangegangenen Schritten an eine externe Speichereinheit 5 übermittelt und dort zu Beweissicherungszwecken gespeichert.

Die Nebenstelle 11, der In-Band-Server 12 und die Text-zu-Sprache-Einheit 7 können in einem einzigen Server kombiniert sein oder als separate Server vorliegen.

Die Nebenstelle 11 übermittelt die Audiodatei über den SIP-Provider 9 und die erste Telekommunikationsverbindung 3b, die in Figur 1 aus Gründen der Übersichtlichkeit in zwei Pfeilen mit unterschiedlichen Bezugszeichen gehalten ist, an das Basismodul 1. Dies erfolgt typischerweise in Form eines Anrufes, den das Basismodul 1 entgegennimmt und einen Konferenzanruf zwischen einer Notrufzentrale 6 über eine zweite Telekommunikationsverbindung 4, einem Insassen des verunglückten Fahrzeugs und dem In-Band-Kommunikationsserver 2 aufbaut.

Alternativ kann die Telefonverbindung zu der zentralen Vermittlungseinheit 2 aufrecht erhalten bleiben und die zweite Telefonverbindung zu der Notrufzentrale 6 als Konferenzschaltung durch das Basismodul 1 hergestellt werden.

Die Notrufzentrale 6, auch als "public answering safety point, PSAP" bezeichnet, bekommt mindestens zwei Mal die von der zentralen Vermittlungseinheit 2 übermittelte Audiodatei vorgespielt und kann in der Folge über die zweite Kommunikationsverbindung 4 versuchen, mit einem der Fahrzeuginsassen, typischerweise einem Fahrer des Fahrzeugs, zu sprechen, um weitere Informationen über den Unfall zu erhalten. Der entsprechende Fahrzeuginsasse ist hierbei in dem dargestellten Ausführungsbeispiel über eine Bluetooth-Verbindung Teilnehmer des Konferenzanrufs.

Falls aus nicht vorhersehbaren Gründen keine Rückantwort von der Notrufzentrale 6 oder der zentralen Vermittlungseinheit 2 das Basismodul 1 erreicht, kann das Basismodul 1 nach Ablauf einer vorgebbaren Zeit selbständig eine Verbindung zur Notfallzentrale 6 aufbauen und die Daten versuchen In-Band zu übertragen sowie die Sprachverbindung herzustellen.

Um Fehlalarme zu vermeiden, kann außerdem vorgesehen sein, dass ein optisches Signal, wie eine blinkende LED den Fahrzeugbetreibern das Absetzen des Notrufsignals anzeigt und über Drücken eines bestimmten Tasters das Senden des Notrufsignals von einem der Fahrer unterbunden werden kann.

Der Konferenzanruf wird schließlich entweder von der Notrufzentrale 6 oder dem Basismodul 1, beispielsweise initiiert durch einen der Fahrzeuginsassen, beendet.

## Patentansprüche

1. Verfahren zum Generieren und Übertragen eines Notrufsignals, bei dem
bei einer Gefahrensituation eines Straßenfahrzeugs durch ein an dem Straßenfahrzeug angeordnetes Basismodul (1) ein Notrufsignal mit einem minimalen Datensatz (MSD), der zumindest eine Identitätsinformation des jeweiligen Basismoduls (1) und eine durch satellitengestützte Navigation oder durch eine Identifikation der Funkzelle, in der sich das Straßenfahrzeug befindet, ermittelte Positionsinformation des Basismoduls (1) enthält, in codierter Form selbstständig generiert und
durch Herstellen einer ersten Telekommunikationsverbindung (3a, 3b) mittels vorherbestimmter und im Basismodul (1) hinterlegter Verbindungsinformationen zu einer zentralen Vermittlungseinheit (2) übermittelt wird, wobei
nachfolgend von der zentralen Vermittlungseinheit (2) das Notrufsignal bezüglich der darin enthaltenen Informationen decodiert wird und
aus der Positionsinformation durch die zentrale Vermittlungseinheit (2) eine Textdatei in einer Sprache generiert wird, die in einem durch die Positionsinformation definierten Gebiet üblich ist, wobei
diese sprachabhängige Textdatei durch in einer Speichereinheit (8) der zentralen Vermittlungseinheit (2) hinterlegte Daten in eine Audiodatei umgewandelt und
die Audiodatei über die erste Telekommunikationsverbindung (3a, 3b) an das Basismodul (1) übermittelt wird und nachfolgend von dem Basismodul (1) durch Herstellen einer zweiten Telekommunikationsverbindung (4) eine Notrufzentrale (6) kontaktiert und die Audiodatei mindestenseinmal abgespielt wird oder
durch das Basismodul (1) eine Konferenzschaltung zwischen dem Basismodul (1), der Notrufzentrale (6) und der zentralen Vermittlungseinheit (2) aufgebaut und dann die Audiodatei mindestens einmal in der Konferenzschaltung abgespielt wird.

2. Verfahren nach Anspruch 1, **dadurch gekennzeichnet, dass** die die erste Telekommunikationsverbindung (3a, 3b) und/oder I*h, die zweite Telekommunikationsverbindung (4) als Funkverbindung oder Telefonverbindung ausgestaltet sind.

3. Verfahren nach Anspruch 2, **dadurch gekennzeichnet, dass** die erste Telekommunikationsverbindung (3a, 3b) und/oder die zweite Telekommunikationsverbindung als eine Internet-Telefonie-Verbindung ausgestaltet sind.

4. Verfahren nach einem der vorhergehenden Ansprüche, **dadurch gekennzeichnet, dass** die zentrale Vermittlungseinheit (2) ein Stoppsignal an das Basismodul (1) überträgt, sobald die Textdatei in der zentralen Vermittlungseinheit (2) generiert wurde, so dass das Übermitteln des Notrufsignals durch das Basismodul (1) beendet wird.

5. Verfahren nach einem der vorhergehenden Ansprüche, **dadurch gekennzeichnet, dass** die decodierten Informationen des Notrufsignals von der zentralen Vermittlungseinheit (2) an eine externe Speichereinheit (5) weitergeleitet und dort archiviert werden.

6. Verfahren nach einem der vorhergehenden Ansprüche, **dadurch gekennzeichnet, dass** ein Benutzer des Straßenfahrzeugs über eine kabellose Funkverbindung, vorzugsweise über eine kabellose Funkverbindung nach dem Industriestandard IEEE 802.15.1, mit dem Basismodul (1) in einer Sprachverbindung verbunden ist.

7. Verfahren nach einem der vorhergehenden Ansprüche, **dadurch gekennzeichnet, dass** durch das Basismodul das Herstellen der ersten Telekommunikationsverbindung (3a, 3b) dem Benutzer des Fahrzeugs angezeigt wird und der Benutzer das Übertragen des Notrufsignals beenden kann.

8. Verfahren nach einem der vorhergehenden Ansprüche, **dadurch gekennzeichnet, dass** am Anfang der Sprachverbindung zur Notrufzentrale (6) der minimalen Datensatz (MSD) konform mit dem e-Call-Standard übermittelt und nachfolgend die Audiodatei abgespielt wird.

9. Verfahren nach einem der vorhergehenden Ansprüche, **dadurch gekennzeichnet, dass** die Audiodatei in ständiger Wiederholung der Notrufzentrale (6) vorgespielt wird, bis diese oder der Benutzer durch Sprache oder ein anderweitig übermitteltes Signal das Abspielen stoppt und/oder
dass weitere, in der zentralen Vermittlungseinheit (2) vorkonfigurierte Parteien durch die zentrale Vermittlungseinheit (2) benachrichtigt werden.

10. System zum Generieren und Übertragen eines Notrufsignals, bei dem
an einem Straßenfahrzeug ein Basismodul (1) angeordnet ist, das dazu eingerichtet ist, bei einer Gefahrensituation des Straßenfahrzeugs ein Notrufsignal mit einem minimalen Datensatz (MSD), der zumindest eine Identitätsinformation des jeweiligen Basismoduls (1) und eine durch satellitengestützte Navigation ermittelte Positionsinformation des Basismoduls (1) enthält, in codierter Form selbstständig zu generieren und
durch Herstellen einer ersten Telekommunikationsverbindung (3a, 3b) mittels vorherbestimmter und im Basismodul (1) hinterlegter Verbindungsinformationen zu einer zentralen Vermittlungseinheit (2) zu übermitteln, wobei
die zentrale Vermittlungseinheit (2) eingerichtet ist, nachfolgend das Notrufsignal bezüglich der darin enthaltenen Informationen zu decodieren und
aus der Positionsinformation durch die zentrale Vermittlungseinheit (2) eine Textdatei in einer Sprache zu generieren, die in einem durch die Positionsinformation definierten Gebiet üblicherweise gesprochen wird, sowie
diese sprachabhängige Textdatei durch in einer Speichereinheit (8) der zentralen Vermittlungseinheit (2) hinterlegte Daten in eine Audiodatei umzuwandeln **dadurch gekennzeichnet, dass** die zentrale Vermittlungseinheit (2) eingerichtet ist,
die Audiodatei über die erste Telekommunikationsverbindung (3a, 3b) an das Basismodul (1) zu übermitteln, wobei nachfolgend das Basismodul (1) ausgebildet ist, durch Herstellen einer zweiten Telekommunikationsverbindung (4) eine Notrufzentrale (6) zu kontaktieren und die Audiodatei abzuspielen oder **dadurch gekennzeichnet, dass**
das Basismodul (1) ausgebildet ist, durch Herstellen einer zweiten Telekommunikationsverbindung (4) in Form einer Konferenzschaltung eine Notrufzentrale (6) zu kontaktieren, wobei die zentrale Vermittlungseinheit (2) ausgebildet ist, die Audiodatei in der Konferenzschaltung abzuspielen.

11. System nach Anspruch 10, **dadurch gekennzeichnet, dass** das Basismodul (1) ausgebildet ist, im Falle eines Nichtzustandekommens der ersten Telekommunikationsverbindung (3a) zu der zentralen Vermittlungseinheit (2), selbständig eine Telekommunikationsverbindung (4) zu einer Notrufzentrale (6) herzustellen und sowohl den minimalen Datensatz (MSD) zu übermitteln, als auch eine Sprachverbindung zu unterstützen.

12. System nach Anspruch 10 oder 11, **dadurch gekennzeichnet, dass** die zentrale Vermittlungseinheit (2) ein Server ist, der zum Umwandeln der Textdatei in die Audiodatei eine Text-zu-Sprache-Einheit (7) aufweist.

13. System nach einem der Ansprüche 10 bis 12, **dadurch gekennzeichnet, dass** im Basismodul (1) exakt eine einzige regionenspezifische Notrufinformation in Form einer anzuwählenden Notrufnummer hinterlegt ist.

14. System nach einem der Ansprüche 10 bis 13, **dadurch gekennzeichnet, dass** die zentrale Vermittlungseinheit (2) dazu ausgebildet ist, als Datenbank sensitive Daten über den Fahrer, insbesondere Gesundheitsinformationen, Krankheiten und/oder Kontakte, die im Notfall benachrichtigt werden sollen, zu speichern und im Notfall weiterzuleiten.

15. System nach einem der Ansprüche 10 bis 14, **dadurch gekennzeichnet, dass** die zentrale Vermittlungseinheit (2) dazu ausgebildet ist, durch das Basismodul (1) im Normalbetrieb gesammelte Daten, insbesondere Positionsdaten und/oder Daten zum Fahrverhalten, zu speichern.

## Claims

1. Method for generating and transmitting an emergency call signal, in which,
in the event of a dangerous situation involving a road vehicle, an emergency call signal having a minimum set of data (MSD) is independently generated in coded form by a base module (1) arranged on the road vehicle, said set of data containing at least one item of identity information relating to the respective base module (1) and an item of position information relating to the base module (1) which is determined by means of satellite-based navigation or by identifying the radio cell in which the road vehicle is situated, and
is transmitted to a central switching unit (2) by establishing a first telecommunications connection (3a, 3b) by means of predetermined connection information stored in the base module (1), wherein
the emergency call signal is then decoded with respect to the information contained therein by the central switching unit (2), and
a text file is generated, from the position information by the central switching unit (2), in a language which is conventional in an area defined by the position information, wherein
this language-dependent text file is converted into an audio file by means of data stored in a storage unit (8) of the central switching unit (2), and
the audio file is transmitted to the base module (1) via the first telecommunications connection (3a, 3b), and an emergency call centre (6) is then contacted by the base module (1) by establishing a second telecommunications connection (4), and the audio file is played at least once, or
a conference call is set up between the base module (1), the emergency call centre (6) and the central switching unit (2) by the base module (1) and the audio file is then played at least once in the conference call.

2. Method according to Claim 1, **characterized in that** the first telecommunications connection (3a, 3b) and/or the second telecommunications connection (4) is/are in the form of a radio connection or a telephone connection.

3. Method according to Claim 2, **characterized in that** the first telecommunications connection (3a, 3b) and/or the second telecommunications connection is/are in the form of an Internet telephony connection.

4. Method according to one of the preceding claims, **characterized in that** the central switching unit (2) transmits a stop signal to the base module (1) as soon as the text file has been generated in the central switching unit (2), with the result that the transmission of the emergency call signal is terminated by the base module (1).

5. Method according to one of the preceding claims, **characterized in that** the decoded information from the emergency call signal is forwarded from the central switching unit (2) to an external storage unit (5) and is archived there.

6. Method according to one of the preceding claims, **characterized in that** a user of the road vehicle has a voice connection to the base module (1) via a wireless radio connection, preferably via a wireless radio connection according to the industrial standard IEEE 802.15.1.

7. Method according to one of the preceding claims, **characterized in that** the establishment of the first telecommunications connection (3a, 3b) is indicated to the user of the vehicle by the base module and the user can terminate the transmission of the emergency call signal.

8. Method according to one of the preceding claims, **characterized in that**, at the start of the voice connection to the emergency call centre (6), the minimum set of data (MSD) is transmitted in accordance with the e-call standard and the audio file is then played.

9. Method according to one of the preceding claims, **characterized in that** the audio file is played to the emergency call centre (6) in a constantly repeated manner until the emergency call centre or the user stops the playback by means of voice or by means of a signal transmitted in another manner, and/or
**in that** further parties preconfigured in the central switching unit (2) are informed by the central switching unit (2).

10. System for generating and transmitting an emergency call signal, in which
a base module (1) is arranged on a road vehicle and is set up, in the event of a dangerous situation involving the road vehicle, to independently generate an emergency call signal having a minimum set of data (MSD) in coded form, said set of data containing at least one item of identity information relating to the respective base module (1) and an item of position information relating to the base module (1) which is determined by means of satellite-based navigation, and
to transmit said emergency call signal to a central switching unit (2) by establishing a first telecommunications connection (3a, 3b) by means of predetermined connection information stored in the base module (1), wherein
the central switching unit (2) is set up to then decode the emergency call signal with respect to the information contained therein and
to generate a text file, from the position information by means of the central switching unit (2), in a language which is usually spoken in an area defined by the position information and
to convert this language-dependent text file into an audio file by means of data stored in a storage unit (8) of the central switching unit (2), **characterized in that** the central switching unit (2) is set up
to transmit the audio file to the base module (1) via the first telecommunications connection (3a, 3b), wherein the base module (1) is then designed to contact an emergency call centre (6) by establishing a second telecommunications connection (4) and to play the audio file, or **characterized in that**
the base module (1) is designed to contact an emergency call centre (6) by establishing a second telecommunications connection (4) in the form of a conference call, wherein the central switching unit (2) is designed to play the audio file in the conference call.

11. System according to Claim 10, **characterized in that** the base module (1) is designed to independently establish a telecommunications connection (4) to an emergency call centre (6) in the absence of the first telecommunications connection (3a) to the central switching unit (2) and to both transmit the minimum set of data (MSD) and support a voice connection.

12. System according to Claim 10 or 11, **characterized in that** the central switching unit (2) is a server which has a text-to-speech unit (7) for converting the text file into the audio file.

13. System according to one of Claims 10 to 12, **characterized in that** exactly one single item of region-specific emergency call information in the form of an emergency call number to be dialled is stored in the base module (1).

14. System according to one of Claims 10 to 13, **characterized in that** the central switching unit (2) is designed, as a database, to store sensitive data relating to the driver, in particular health information, illnesses and/or contacts to be informed in an emergency, and to forward said data in an emergency.

15. System according to one of Claims 10 to 14, **characterized in that** the central switching unit (2) is designed to store data collected by the base module (1) during normal operation, in particular position data and/or data relating to the driving behaviour.

## Revendications

1. Procédé pour la génération et la transmission d'un signal d'appel d'urgence, dans lequel
dans une situation dangereuse où se trouve un véhicule routier, un signal d'appel d'urgence est généré de manière autonome sous forme codée par un module de base (1) disposé sur le véhicule routier, avec un ensemble de données minimal (MSD), qui contient au moins une information d'identité du module de base (1) respectif et une information de position du module de base (1), déterminée par une navigation assistée par satellite ou par une identification de la station de radio dans le champ de laquelle se trouve le véhicule routier et
est transmis grâce à l'établissement d'une première liaison de télécommunication (3a, 3b) au moyen d'informations de liaison prédéterminées et enregistrées dans le module de base (1) à une unité de commutation centrale (2), dans lequel
le signal d'appel d'urgence est ensuite décodé par l'unité de commutation centrale (2) en fonction des informations qui y sont contenues et
un fichier texte est généré à partir de l'information de position par l'unité de commutation centrale (2) dans une langue qui est employée dans une région définie par l'information de position, dans lequel
ce fichier texte dépendant de la langue est converti, grâce à des données enregistrées dans une unité de mémoire (8) de l'unité de commutation centrale (2), en un fichier audio et
ledit fichier audio est transmis par l'intermédiaire de ladite première liaison de télécommunication (3a, 3b) au module de base (1) puis une centrale d'appel d'urgence (6) est contactée par le module de base (1) grâce à l'établissement d'une deuxième liaison de télécommunication (4) et le fichier audio est lu au moins une fois ou
un circuit de conférence est établi par le module de base (1) entre le module de base (1), la centrale d'appel d'urgence (6) et l'unité de commutation centrale (2) puis le fichier audio est lu au moins une fois dans le circuit de conférence.

2. Procédé selon la revendication 1, **caractérisé en ce que** la première liaison de télécommunication (3a, 3b) et/ou la deuxième liaison de télécommunication (4) sont conçues comme des liaisons radio ou des liaisons téléphoniques.

3. Procédé selon la revendication 2, **caractérisé en ce que** la première liaison de télécommunication (3a, 3b) et/ou la deuxième liaison de télécommunication sont conçues comme des liaisons de téléphonie par Internet.

4. Procédé selon l'une des revendications précédentes, **caractérisé en ce que** l'unité de commutation centrale (2) transmet un signal d'arrêt au module de base (1) dès que le fichier texte a été généré dans l'unité de commutation centrale (2), de sorte que la transmission du signal d'appel d'urgence par le module de base (1) est terminée.

5. Procédé selon l'une des revendications précédentes, **caractérisé en ce que** les informations décodées du signal d'appel d'urgence sont transférées par l'unité de commutation centrale (2) à une unité de mémoire externe (5) et y sont archivées.

6. Procédé selon l'une des revendications précédentes, **caractérisé en ce qu'**un utilisateur du véhicule routier est relié, par l'intermédiaire d'une liaison radio sans fil, de préférence par l'intermédiaire d'une liaison radio sans fil selon le standard industriel IEEE 802.15.1, avec le module de base (1) par une liaison vocale.

7. Procédé selon l'une des revendications précédentes, **caractérisé en ce que** le module de base affiche l'établissement de la première liaison de télécommunication (3a, 3b) à l'intention de l'utilisateur du véhicule et l'utilisateur peut mettre fin à la transmission du signal d'appel d'urgence.

8. Procédé selon l'une des revendications précédentes, **caractérisé en ce que**, au début de la liaison vocale avec la centrale d'appel d'urgence (6), l'ensemble de données minimal (MSD) est transmis conformément au standard e-Call puis le fichier audio est lu.

9. Procédé selon l'une des revendications précédentes, **caractérisé en ce que** le fichier audio est lu à la centrale d'appel d'urgence (6) avec une répétition constante jusqu'à ce que celle-ci ou l'utilisateur arrête la lecture par commande vocale ou à l'aide d'un signal transmis d'une autre manière et/ou
d'autres parties préconfigurées dans l'unité de commutation centrale (2) sont informées par l'unité de commutation centrale (2).

10. Système pour la génération et la transmission d'un signal d'appel d'urgence dans lequel
sur un véhicule routier est disposé un module de base (1) qui est configuré pour générer, de manière autonome sous forme codée, lors d'une situation dangereuse où se trouve le véhicule routier, un signal d'appel d'urgence avec un ensemble de données minimal (MSD) qui contient au moins une information d'identité du module de base (1) respectif et une information de position du module de base (1) déterminée par navigation assistée par satellite et
pour le transmettre à une unité de commutation centrale (2) grâce à l'établissement d'une première liaison de télécommunication (3a, 3b) au moyen d'informations de liaison prédéterminées et enregistrées dans le module de base (1), dans lequel
l'unité de commutation centrale (2) est configurée pour décoder ensuite le signal d'appel d'urgence en fonction des informations qui y sont contenues et
un fichier texte est généré à partir de l'information de position par l'unité de commutation centrale (2) dans une langue qui est habituellement parlée dans une région définie par l'information de position, et
ce fichier texte dépendant de la langue est converti, grâce à des données enregistrées dans une unité de mémoire (8) de l'unité de commutation centrale (2), en un fichier audio
**caractérisé en ce que** l'unité de commutation centrale (2) est configurée
pour transmettre le fichier audio au module de base (1) par l'intermédiaire de la première liaison de télécommunication (3a, 3b), et **en ce que** le module de base (1) est conçu pour contacter ensuite une centrale d'appel d'urgence (6) grâce à l'établissement d'une deuxième liaison de télécommunication (4) et pour lire le fichier audio
ou **caractérisé en ce que**
le module de base (1) est conçu pour contacter une centrale d'appel d'urgence (6) grâce à l'établissement d'une deuxième liaison de télécommunication (4) sous la forme d'un circuit de conférence, dans lequel l'unité de commutation centrale (2) est conçue pour lire le fichier audio dans le circuit de conférence.

11. Système selon la revendication 10, **caractérisé en ce que** le module de base (1) est conçu pour établir, de manière autonome, en cas d'absence de la première liaison de télécommunication (3a) avec l'unité de commutation centrale (2), une liaison de télécommunication (4) avec une centrale d'appel d'urgence (6) et pour transmettre l'ensemble de données minimal (MSD) ainsi que pour entretenir une liaison vocale.

12. Système selon la revendication 10 ou 11, **caractérisé en ce que** l'unité de commutation centrale (2) est un serveur qui comprend, pour la conversion du fichier texte en fichier audio, une unité texte-audio (7).

13. Système selon l'une des revendications 10 à 12, **caractérisé en ce que**, dans le module de base (1) est enregistrée exactement une seule information d'appel d'urgence spécifique à la région sous la forme d'un numéro d'appel d'urgence à composer.

14. Système selon l'une des revendications 10 à 13, **caractérisé en ce que** l'unité de commutation centrale (2) est conçue pour enregistrer, en tant que base de données, des données sensibles concernant le conducteur, plus particulièrement des informations concernant la santé, les maladies et/ou les contacts qui doivent être informés en cas d'urgence et pour les transmettre en cas d'urgence.

15. Système selon l'une des revendications 10 à 14, **caractérisé en ce que** l'unité de commutation centrale (2) est conçue pour enregistrer les données collectées par le module de base (1) en fonctionnement normal, plus particulièrement les données de position et/ou les données concernant le comportement de conduite.
